# EUROPÄISCHE PATENTSCHRIFT

(11) **EP 1 418 399 B1**
(45) Veröffentlichungstag und Bekanntmachung des Hinweises auf die Patenterteilung: **19.08.2015**
(21) Anmeldenummer: 03020248.5
(22) Anmeldetag: 08.09.2003
(51) Int. Cl.: G01B 11/27

(54) **Vorrichtung zum Vermessen von Werkzeugmaschinen**
Device for measuring machine tools
Dispositif pour mesurer des machine-outils

(30) Priorität: 27.09.2002 DE 10245436
(43) Veröffentlichungstag der Anmeldung: 12.05.2004
(73) Patentinhaber: Prüftechnik Dieter Busch AG, 85737 Ismaning (DE)
(72) Erfinder: Lysen, Heinrich, 85748 Garching (DE)
(74) Vertreter: Schwan Schorer & Partner mbB

(56) Entgegenhaltungen:
- DE-C1- 3 619 931
- US-A- 4 518 855
- US-A- 5 302 833
- US-A- 5 576 780
- US-A- 6 023 337

## Beschreibung

Die Erfindung betrifft eine Vorrichtung zur Präzisionsvermessung von Werkzeugmaschinen.

Eine Vorrichtung mit Laser-Emitter und Detektor zur Messung der Ausrichtung von Werkzeugmaschinen ist z.B. aus US 5,302,833 bekannt.

In der US 4,518,855 ist eine Vorrichtung zum Wellenausrichten beschrieben, wobei jede von zwei einander gegenüberliegend jeweils an einer der beiden auszurichtenden Wellen montierten Messeinheiten zwei senkrecht zueinander angeordnete optische Detektoren aufweist und zwei parallele Lichtstrahlen mittels einer Laserdiode, einem Strahlteiler zum Aufteilen des von der Laserdiode abgegebenen Laserstrahls sowie mehreren Umlenkspiegeln erzeugt.

Die herkömmliche Vermessung von Werkzeugmaschinen verwendet unter anderem optische Meßmittel, welche auf Interferometrie beruhen und daher vergleichsweise teuer sind.

Es ist Aufgabe der Erfindung, qualitativ annähernd gleich gut geeignetes Meßwerkzeug für Messungen dieser Art zur Verfügung zu stellen, welches einfacher im Gebrauch ist und sich durch deutlich günstigere Herstellungskosten auszeichnet.

Diese Aufgabe wird mit den im Anspruch 1 angegebenen Mitteln gelöst.

Die Erfindung beruht auf einem kombinierten Sende-/Empfangsteil, welches in identischer Bauform in zumindest zwei Exemplaren für eine jeweils auszuführende Meßaufgabe bereitgestellt wird. Durch die identische Gestaltung der Sende-/Empfangsteile ergeben sich erhebliche Kostenvorteile bei der Herstellung dieser Artikel.

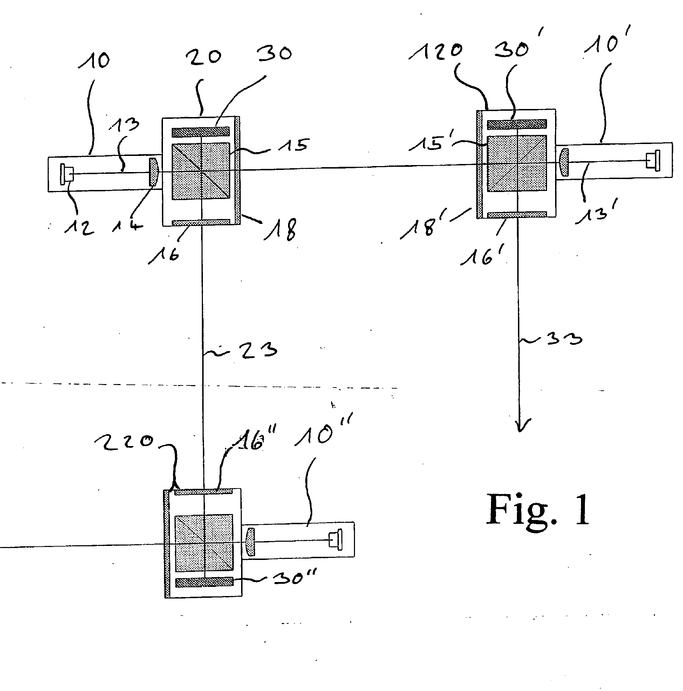

Die Erfindung wird im Folgenden anhand der Fig. 1 erläutert.

Ein Sende-/Empfangsteil 20, 120 bzw. 220 weist ein Gehäuse auf, welches an einer Seite mit einem Spannzylinder 10, 10' bzw. 10" ausgestattet ist, an welchen es gehaltert oder in eine Spindel einer Werkzeugmaschine eingespannt werden kann. Es ist von Vorteil, innerhalb der Spannzylinder eine batteriebetriebene Stromversorgung (nicht gezeigt), eine Leucht- oder Laserdiode 12 sowie eine Kollimationsoptik 14 vorzusehen. Mit diesen Komponenten kann ein schmal ausgeblendeter Lichtstrahl, speziell ein Laserstrahl, bereitgestellt werden. Ein auf diese Weise erzeugter Laserstrahl (z.B. 23, 33) ist geeignet, ein elektronisches, zweidimensional auslesbares Target 30, 30' zu beleuchten. Die von einem solchen Target abgegebenen Signale repräsentieren also den Einfallsort des Laserstrahles, und können zur genauen Vermessung einer Werkzeugmaschine herangezogen werden.

Werden zum Beispiel die Vorrichtungen 20, 120 jeweils durch eine von mehreren Spindeln einer Werkzeugmaschine gehaltert, so wird nur bei vollständig ausgerichteter und präzise geführter Werkzeugmaschine ein durch die Laserdiode 12 generierter Laserstrahl 13 durch den ersten Strahlteiler oder Teilerspiegel 15 und den zweiten Teilerspiegel 15' das Zentrum des Targets 30' treffen. Gleiches gilt für den durch die andere Laserdiode erzeugten Laserstrahl 13 ' und dessen Auftreffpunkt auf dem Target 30, wobei im Idealfall beide Laserstrahlen koinzidieren würden. Abweichungen von dieser Idealsituation werden durch die beteiligten Sensoren der Targets nach jeweils zwei Koordinaten mit hoher Präzision im Submikrometerbereich registriert, und zwar sowohl für Abweichungen hinsichtlich Parallelversatzes der Spindeln, als auch für Winkelversatz der Spindeln.

Der Einfall von Fremdlicht auf die Targets 30, 30' wird durch Filterfenster 18, 18' reduziert, welche an den Wellenlängenbereich des verwendeten Laserlichtes angepaßt sind.

Wie im unteren Teil der Fig. 1 gezeigt, wird die erfindungsgemäße Vorrichtung durch Bereitstellung eines weiteren Filterfensters 16, 16' wesentlich universeller einsetzbar, als ohne ein solches. Durch diese Maßnahme ist es nämlich möglich, auch die Kinematik einer weiteren Spindel, bzw. einer Verfahrrichtungsmöglichkeit für ein Werkzeug oder ein Werkstück, zusätzlich zu überprüfen. Auch in diesem Falle ist es von Vorteil, zwei Lichtstrahlen als Meßzeiger zu verwenden, welche auf zugehörige unterschiedliche Targets treffen.

Die gezeigten Vorrichtungen können in vielfältiger Weise zur Erfüllung einer jeweils vorgesehenen Meßaufgabe in allen Achsen des Raumes gegeneinander verschoben, gekippt bzw. verdreht werden.

## Patentansprüche

1. Vorrichtung zum Vermessen von Werkzeugmaschinen, mit mindestens einem ersten und einem zweiten Sende-/Empfangsteil (20, 120, 220), die jeweils ein Gehäuse, eine Stromversorgung, einen Spannzylinder oder-zapfen (10, 10', 10"), einen Lichtstrahlsender (12, 14) zur Erzeugung eines Lichtstrahls (13, 13'), einen Strahlteiler (15, 15'), ein erstes Eintritts/Austrittsfenster (18, 18'), ein zweites Eintritts/Austrittsfenster (16, 16', 16") und ein zweidimensional auslesbares optoelektronisches Target (30, 30', 30") aufweisen, wobei der Strahlteiler jeweils so angeordnet ist, dass sowohl der vom Lichtstrahlsender erzeugte und durch das erste oder zweite Fenster auf das Target des anderen Sende-/Empfangsteil gerichtete Lichtstrahl als auch ein von dem Lichtstrahlsender des anderen Sende-/Empfangsteil erzeugte und durch das erste oder zweite Fenster auf das Target des Sende-/Empfangsteils gerichtete Lichtstrahl den Strahlteiler durchlaufen, und wobei der Strahlteiler ausgebildet ist, um den vom dem Lichtstrahlsender erzeugten Lichtstrahl in einen ersten durch das erste Fenster austretenden Strahl und einen zweiten durch das zweite Fenster austretenden Strahl aufzuteilen.

## Claims

1. Apparatus for gauging machine tools, having at least a first and a second transmission/reception portion (20, 120, 220), which each have a housing, a power supply, a clamping cylinder or pin (10, 10', 10"), a light beam transmitter (12, 14) for producing a light beam (13, 13'), a beam splitter (15, 15'), a first entry/exit window (18, 18'), a second entry/exit window (16, 16', 16") and a two-dimensionally readable optoelectronic target (30, 30', 30"), wherein the beam splitter is arranged in each case such that both the light beam that is produced by the light beam transmitter and directed through the first or second window onto the target of the other transmission/reception portion and a light beam that is produced by the light beam transmitter of the other transmission/ reception portion and directed through the first or second window onto the target of the transmission/reception portion pass through the beam splitter, and wherein the beam splitter is designed to split the light beam produced by the light beam transmitter into a first beam exiting through the first window and a second beam exiting through the second window.

## Revendications

1. Dispositif pour mesurer des machines-outils, comprenant au moins une première et une deuxième pièce d'émission/réception (20, 120, 220), qui présentent chacune un boîtier, une alimentation électrique, un cylindre ou un tourillon de serrage (10, 10', 10''), un émetteur de faisceau lumineux (12, 14) pour générer un faisceau lumineux (13, 13'), un diviseur de faisceau (15, 15'), une première fenêtre d'entrée/sortie (18, 18'), une deuxième fenêtre d'entrée/sortie (16, 16', 16'') et une cible optoélectronique lisible sous forme bidimensionnelle (30, 30', 30''), le diviseur de faisceau étant disposé à chaque fois de telle sorte que le faisceau lumineux généré par l'émetteur de faisceau lumineux et orienté vers la cible de l'autre pièce d'émission/réception à travers la première ou la deuxième fenêtre ainsi qu'un faisceau lumineux généré par l'émetteur de faisceau lumineux de la deuxième pièce d'émission/réception et orienté vers la cible de la pièce d'émission/réception à travers la première ou la deuxième fenêtre passent tous deux à travers le diviseur de faisceau, et le diviseur de faisceau étant réalisé de telle sorte qu'il divise le faisceau lumineux généré par l'émetteur de faisceau lumineux en un premier faisceau sortant par la première fenêtre et en un deuxième faisceau sortant par la deuxième fenêtre.
